## Europäisches Patentamt

## European Patent Office

## Office européen des brevets

(11) Veröffentlichungsnummer: **0 233 840**
**B1**

(12) **EUROPÄISCHE PATENTSCHRIFT**

(45) Veröffentlichungstag der Patentschrift:
**10.05.89**

(51) Int. Cl.⁴: **G03B 17/30**, G03C 3/00

(21) Anmeldenummer: **87810072.6**

(22) Anmeldetag: **05.02.87**

(54) **Filmkassette.**

(30) Priorität: **11.02.86  GB 8603253**

(43) Veröffentlichungstag der Anmeldung:
**26.08.87 Patentblatt 87/35**

(45) Bekanntmachung des Hinweises auf die Patenterteilung:
**10.05.89 Patentblatt 89/19**

(84) Benannte Vertragsstaaten:
**BE CH DE FR GB IT LI**

(56) Entgegenhaltungen:
**DE-C- 850 689**
**US-A- 3 043 534**
**US-A- 3 147 681**

(73) Patentinhaber: **CIBA-GEIGY AG, Klybeckstrasse 141,
CH-4002 Basel(CH)**

(72) Erfinder: **Coote, Jack Howard, "The Towans" Hall Road,
Rockford Essex(GB)**
Erfinder: **Turner, George F. A. M., "Monks Acres"
Woolmongers Lane Blackmore, Ingatestone Essex
CM4 0JX(GB)**

ACTORUM AG

## Beschreibung

Die Erfindung betrifft eine Kassette der im Oberbegriff des Patentanspruchs 1 beschriebenen Art. Moderne automatische Kameras enthalten eine größere Anzahl Hilfsmittel, die zu ihrem Betrieb die Verwendung einer Batterie verlangen. Zu den Hilfsmitteln mit dem höchsten Energieverbrauch gehört die automatische Aufnahme-nach-Aufnahme erfolgende Abwicklung des Films aus der Kassette. Um eine Bildlänge des Films aus der Kassette herauszuziehen, müssen erhebliche Reibungskräfte überwunden werden, was eine beträchtliche Belastung der Batterie mit sich bringt. In der Tat kommt es öfters vor, daß eine automatische Kamera mitten im Aufnehmen eines Films versagt, weil die Batterie aufgebraucht und kein manueller Filmantrieb vorhanden ist. Um daher das Entladen der Batterie in einer automatischen Kamera zu reduzieren, wäre es vorteilhaft, die beim Abwickeln des Films aus der Kassette auftretenden Reibungskräfte zu verringern.

Drei hauptsächliche Ursachen für die bei der Abwicklung eines Films aus der Kassette auftretenden Reibungskräfte sind im folgenden zu sehen:

a) Die Reibung, die entsteht, wenn der Film an den Lichtdichtungen aus Samt vorbeigeführt wird, welche die Lichtdichtungslippen zu beiden Seiten des Filmaustrittsschlitzes der Kassette bilden;

b) diejenige Reibung, die beim Lostrennen der äussersten Windung des in der Kassette aufgewickelten Films von der darunter liegenden Windung erzeugt wird; wenn der aufgewickelte Film in die Kassette eingeführt wird, ist er bestrebt, uhrfederartig nach aussen gegen die Innenwandung der Kassette zu drücken;

c) die Reibung, die beim Überwinden der fortgesetzt entstehenden Wellungen des Films im vor dem Austrittsschlitz liegenden Bereich im Kasseteninneren entsteht; diese Wellungen werden ebenfalls durch die uhrfederartige Spreizung des Films bei seiner Abwicklung verursacht.

Es sind bereits Kassetten vorgeschlagen worden, die keine Lichtdichtungsrippen aus Samt erfordern, z.B., die in den GB-PSen 1 082 488 und 1 458 819 beschriebenen Kassetten. Doch hat sich bei diesen beiden Kassettentypen gezeigt, dass beim Herausziehen des Films an den dort vorhandenen Licht-Labyrinthdichtungen vorbei erhöhte Reibungskräfte auftreten. Auch kamen Verzerrungen des Films vor.

In der DE-C 850 689 wird eine Filmkassette beschrieben, welche zwei ineinandergesteckte koaxiale zylindrische Hülsen mit einem dazwischen freigelassenen umlaufenden Kanal für den Film umfasst. Die beiden Hülsen sind mit je mindestens einer offenen Stirnseite ausgestattet. Durch die zylindrische Form der inneren Hülse bedingt, muss der Film über die beim Abwickeln innenliegende achsparallele Hülsenöffnungskante umgelenkt werden. Dadurch kommt es zu erhöhter Reibung des Filmes an dieser Öffnungskante der inneren Hülse. Diese erhöhte Reibung erschwert das Herausziehen des Filmes aus der Kassette. Dadurch werden die Batterien von Kameras mit automatischem Filmtransport vorzeitig entladen. Ausserdem kann der Film durch die Reibung an der Öffnungskante beschädigt werden. Darüber hinaus müssen die koaxialen zylindrischen Hülsen durch eine zusätzliche Verriegelungseinrichtung, welche als Nabe-Nischen Kombination ausgebildet ist, gegen gegenseitiges axiales und radiales Verschieben und Verdrehen fixiert werden.

Gleichwohl bleibt die Schaffung von Kassetten ohne Samt ein höchst erstrebenswertes Ziel, weil dadurch nicht nur die Reibung herabgesetzt, sondern auch das Entstehen von Kratzspuren auf den Filmen vermieden würde, da Sand und andere harte Teilchen leicht im Samt festgehalten werden, die dann jedesmal, wenn der Film an ihnen vorbeigezogen wird, Kratzspuren verursachen. Auch ist das Einsetzen und Anhaften der Samtstücke im Schlitz umständlich und erfordert die Verwendung von Klebmitteln, was manchmal andere Teile der Kassette verschmutzt.

Aufgabe der vorliegenden Erfindung ist daher die Verwirklichung einer Kassette mit darin befindlichem, auf einer Spule aufgewickeltem Film, die keine Lichtdichtungen aus Samt benötigt, und bei welcher die beim Ausgeben des Films aus der Kassette entstehenden Reibungskräfte stark verringert sind.

Diese Aufgabe wird durch die vorliegende Erfindung gelöst, welche eine Kassette der eingangs beschriebenen Art vorsieht, die die im kennzeichnenden Teil des Patentanspruchs 1 aufgeführten Merkmale aufweist. Die Anfertigung der Filmleit-Blattspirale aus einem Streifen von federndem Material durch Verformen des Streifens zu einer angenähert zylindrischen Hülse mit durchgehendem Längsschlitz führt dazu, daß die Hülse beim Zusammenpressen die Tendenz hat, wieder in ihre frühere Form zurückzukehren.

Bekanntlich bildet ein Filmstreifen, der Windung nach Windung aufgewickelt wird, eine Spirale und keinen Zylinder. Mit der Bezeichnung "Filmleit-Blattspirale" ist daher eine Einsatzwand gemeint, die in der Lage ist, einen aufgewickelten Materialstreifen (Filmstreifen) im aufgewickelten oder Spiralzustand zu halten und die einen Längsspalt (parallel zur Wickelachse) aufweist, durch welchen die vorauslaufende Kante des aufgewickelten Streifens austreten kann, so daß das aufgewickelte Material abgewickelt werden kann. Um den aufgewickelten Materialstreifen leicht aus der Blattspirale herausführen zu können, hat die Kante auf der einen Seite des Längsschlitzes größeren Abstand von der Spiralenachse als die andere Spaltkante und kann so das Endstück der äußersten Windung des aufgewickelten Materials in sich aufnehmen. Infolgedessen wirkt in der Kassette nach der Erfindung die Filmleit-Blattspirale auch als Lichtfalle und hindert außerdem die Windungen des aufgewickelten Films daran, uhrfederartig abgespreizt und gegen die Innenwandung der Kassette angedrückt zu werden. Hierdurch wird die Verwendung von Lichtdichtungslippen aus Samt überflüssig. Auch wird die beim Herausschieben des Filmstreifens aus der Kassette bei jeder Aufnahme auftretende Reibung verringert, indem keine Lichtdichtungslippen aus Samt vorhanden sind und indem verhindert wird, daß die Filmwindungen uhrfederartig gegen die Kasetteninnenwandung gedrückt werden oder Wellungen im Film vor dem Kassetten-Austrittsschlitz auftreten.

Die Kassette nach der Erfindung wird am häufigsten als Kassette für photographisches 35 mm Filmmaterial ausgeführt und ihre Verwendung in diesem Zusammenhang unter Bezugnahme auf die beigefügte Zeichnung beschrieben; doch kann die erfindungsgemäße Kassette auch mit Filmmaterial jeder beliebigen Breite, wie z.B. 16 mm oder 70 mm verwendet werden.

Vorzugsweise wird die Filmleit-Blattspirale aus einem dünnen Metallstreifen, z.B. aus rostfreiem Stahl oder Hartaluminium gefertigt, da solche Metalle unschwer zu Blattspiralen der gewünschten Gestalt verformt werden können und federn. In diesem Zusammenhang wird unter einem dünnen Metallstreifen vorzugsweise ein solcher von 0,1 bis 0,5 mm und besonders bevorzugt von 0,2 mm verstanden. Es ist außerdem möglich, die Filmleit-Blattspirale aus einem Metall herzustellen, dessen Oberfläche reibungsverringernd behandelt wurde. Auch kann die Filmleit-Blattspirale aus einem stark federnden, opaken Kunststoff hergestellt werden, z.B. kohlenstoffgefülltem Polystyrol. Hierbei kann die Dicke des Kunststoffstreifens ebenfalls vorzugsweise zwischen 0,1 und 0,5 mm, besonders bevorzugt 0,2 mm betragen.

In einer bevorzugten Ausführungsform der Kassette nach der Erfindung ist das Ende des längeren, inneren Bereichs der Blattspirale, der eine solche Breite aufweist so gestaltet, daß er durch die an jedem Stirnende der Kassette vorgesehenen Haltemittel daran gehindert wird, in Berührung mit der Kasetteninnenwandung zu kommen, zu seiner inneren Endkante hin an Dicke abnimmt und in einem dünnen biegsamen Ende ausläuft. Seine Dicke nimmt, z.B. zur Endkante hin bis auf 0,005 mm ab. Dieses an Dicke abnehmende Ende der Blattspirale kann noch dazu größere Flexibilität an seinem äußersten Ende erhalten, indem in der Innenwandungsfläche der Blattspiralenhülse Wellungen oder Nuten vorgesehen sind. Bei dieser bevorzugten Ausführungsform muß eine jede in der Kassette verwendete Spule Endflansche von herabgesetztem Durchmesser aufweisen, um das vorgenannte innere Ende der Blattspirale einwärts (zur Spiralenachse hin) biegen zu können, wenn das allerletzte Endstück des auf der Spule aufgewickelten Films in den Durchlaß zwischen der äußeren Wandungsseite der Blattspirale und der Kasetteninnenwandung eingeführt wird. Dieses einwärts biegsame Ende der Filmleit-Blattspirale erlaubt dem von der mittigen Spule in der Kassette abgewickelten Filmende einen kurvenförmigen Auslaßweg und setzt so die Transportkraft herab, die erforderlich ist, um die letzten, innersten Windungen des Filmes nach außen zu befördern.

Die meisten zur Zeit im Gebrauch befindlichen 35 mm-Filmkassetten haben zwei Endkappen, die auf die beiden Stirnenden des Kassettenkörpers mit Druck aufgesetzt werden. Die beiden Stirnenden der Kassette weisen gewöhnlich Nuten auf, in welche Flansche der Endkappen hineinpassen. Der radiale Abstand zwischen der inneren Kassettenwandung und demjenigen Bereich, in welchem die einwärts vorspringend eingebuchteten Nuten an den Kassettenenden der Kassettenmittelachse am nächsten liegen, ist gewöhnlich größer als die Dicke des Filmstreifens. So ist vorteilhafterweise die Breite des Streifens aus federndem Material, aus welchem die Blattspiralenhülse geformt ist, über ihren größeren Bereich gerade etwas größer als die Entfernung in axialer Richtung zwischen den mit Nuten versehenen Bereichen an jedem Ende der Kassette, jedoch kürzer als der Abstand zwischen den beiden Endkanten. Dies gestattet, die Blattspiralenhülse so in die Kassette einzusetzen, daß ihre Endränder gegen die Nutenböden gedrückt werden. Hierdurch wird über den größeren Umfangsbereich der Blattspirale jeweils der eine der beiden Spiralenränder gegen den Boden einer der beiden Nuten gedrückt und hierdurch verhindert, daß die Blattspirale an der Kasetteninnenwandung in diesem größeren Umfangsbereich anstößt. Auch wird so ein Zwischenraum zwischen der Kasetteninnenwandung und der äußeren Wandungsfläche der Blattspiralenhülse geschaffen, der einen Durchlaß für den Filmmaterialstreifen bietet.

Hingegen ist die Breite des kürzeren, äußeren Bereichs des federnden Materialstreifens, aus welchem die Blattspiralenhülse geformt wird, so bemessen, daß sie kleiner als der Abstand zwischen den beiden Nuten an den Kassettenenden ist. Hierdurch zwingt die federnde Materialeigenschaft der Blattspirale das Ende der letzteren nach der Kante mit engerer Breite hin, sich an die Kasetteninnenwandung anzudrücken.

Die Kassette nach der Erfindung kann auch eine abgestufte Kassette sein, in welcher der Kassettenkörper zwischen seinen beiden Nabenenden mit einer nach außen erweiterten Abstufung versehen ist, welche einen Durchlaß zwischen der Kassetteninnenwandung und der äußeren Wandung der Blattspiralenhülse schafft, da ohne eine solche Abstufung die Blattspiralenhülse durch die auf den Kassettenkörper aufgesteckten Endkappen direkt dem Kassettenkörper benachbart befestigt würde. Doch werden in diesem Falle keine Halterungsmittel benötigt, um die Blattspiralenhülse im Abstand von der Kassettenwandung zu halten, da dies durch die ausgebuchtete Abstufung der Kassette bewerkstelligt wird.

Hingegen sind im Falle einer Kassette mit aufzupressenden Endkappen weitere Halterungsmittel erforderlich, um die Blattspiralenhülse in der gewünschten Stellung festzuhalten. Diese Arretierung kann leicht erreicht werden, indem ein Eingriffsglied, z.B. eine Nase, auf der Außenseite der Blattspiralenhülse in Eingriff mit einem entsprechenden Schließorgan, z.B. einer Einbuchtung oder Rast, auf der Kasetteninnenwandung gebracht wird.

Vorzugsweise erstreckt sich der (parallel mit der Spulenachse gemessen) breitere Bereich der Blattspiralenhülse über 50 bis 80% der Gesamtlänge der Blattspirale, wobei ein breiterer Bereich, der sich über 2/3 der Spiralenlänge erstreckt, besonders vorteilhaft ist. Der Bereich geringerer Breite nimmt den übrigbleibenden Anteil der Gesamtlänge der Blattspirale ein. Auch bildet der Übergang vom breiteren zum schmäleren Bereich der Blattspirale vorzugsweise zwei Schultern oder Stufen in den Längsrändern der Blattspirale, der Übergang kann aber auch anders, z.B. abgerundet oder allmählich abnehmend ausgebildet sein. Der Längsspalt zwischen den beiden Endkanten der in die Kassette eingebauten Filmleit-Blattspiralenhülse hat eine Weite von vorzugsweise etwa 3 bis 4 mm. Ein engerer Spalt erschwert das Herausziehen des Filmstreifens aus der Hülse während ein breiterer Spalt dazu führen kann, daß sich der Film vor dem Eintritt in diesen wellt.

Die beigefügte Zeichnung dient zur Veranschaulichung der Erfindung. Darin ist

Fig. 1 eine perspektivische Ansicht der auseinander gezogenen Teile einer normalen 35 mm-Filmkassette mit auf eine Spule aufgewickeltem Film;

Fig. 2 eine Draufsicht auf einen noch unverformten Metallstreifen, aus welchem eine Filmleit-Blattspirale geformt werden kann;

Fig. 3 eine perspektivische Ansicht einer ersten Ausführungsform der aus dem Streifen nach Fig. 2 geformten Blattspirale;

Fig. 4 ein Längsschnitt in schematischer Darstellung durch einen Teil der Kassette nach der Erfindung;

Fig. 5 ein Querschnitt durch eine beschickte Kassette nach der Erfindung in einer in Fig. 4 durch V–V angedeuteten Ebene;

Fig. 6 ein Längsschnitt durch einen Teil einer anderen, abgestuften Ausführungsform der Kassette nach der Erfindung;

Fig. 7 ein Querschnitt durch eine andere Ausführungsform der Blattspirale nach der Erfindung, deren Dicke nach der einen Längsspaltkante hin abnimmt, und

Fig. 8 ein Querschnitt durch eine beladene Kassette nach der Erfindung mit eingebauter Blattspiralenhülse in der Ausführungsform nach Fig. 7 im Stadium der Ausgabe der letzten Windungen des auf die Spule in der Kassette aufgewickelten Films.

In allen Figuren haben gleiche Bezugszeichen die gleiche Bedeutung.

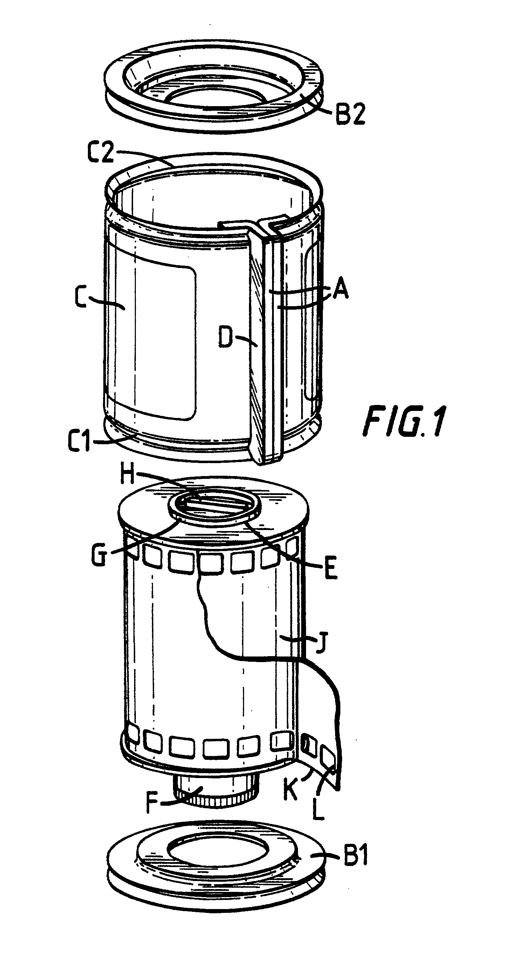

In Fig. 1 ist eine normale 35 mm-Kassette gezeigt, welche zwei ringförmige Endkappen B1 und B2 und einen im wesentlichen zylindrischen Kassettenkörper C mit einer Schlitzeinrichtung D umfaßt, die einen sich parallel zur Kassettenkörperachse erstreckenden Filmaustrittsschlitz umfaßt und die gebildet wird, indem die beiden Enden eines Metallstreifens, aus welchem der Kassettenkörper C geformt wird, zusammengekniffen werden, so daß zu beiden Seiten des Schlitzes Lippen entstehen, auf deren einander zugekehrten Fläche Samtstreifen A, z.B durch Ankleben befestigt werden, die eine Lichtdichtung bilden.

Der Kassettenkörper C dient zur Aufnahme eines Filmes J, der auf eine mit Endflanschen versehene Spule E aufgewickelt ist, die ein in Fig. 1 nach unten gerichtetes, aus dem unteren Endflansch der Spule herausragendes längeres Nabenende F und ein über den oberen Spulenendflansch aufwärts ragendes kurzes Nabenende G umfaßt. Der Film J besitzt eine vorauslaufende Kante K am freien Ende der äußersten Filmwindung und im Bereich seiner Längsränder übliche Transportlöcher L.

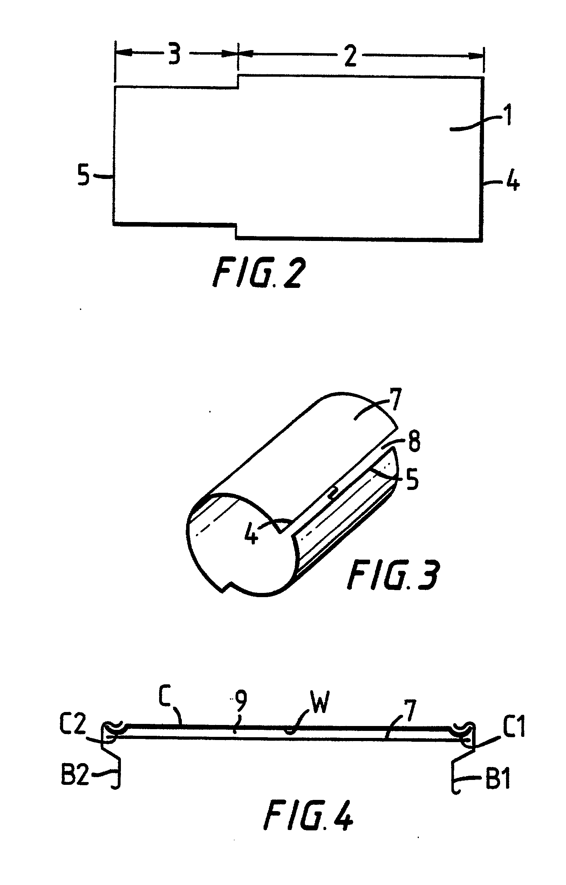

In Fig. 2 ist ein dünner Metallstreifen 1 gezeigt, dessen Gesamtlänge sich aus einem längeren Bereich 2 und einem kürzeren Bereich 3 zusammensetzt, von denen die Streifenbreite des längeren Bereichs 2 größer ist als diejenige des kürzeren Bereichs. An beiden Längsrändern des Streifens ist der Übergang vom längeren zum kürzeren Bereich stufenartig abgesetzt. Vorteilhafterweise beträgt die Länge des Bereichs 2 etwa 2/3 der Gesamtlänge des Streifens 1. Am freien Ende des längeren Bereichs 2 befindet sich eine Endkante 4 und am entgegengesetzten Streifenende weist der kürzere Bereich eine Endkante 5 auf.

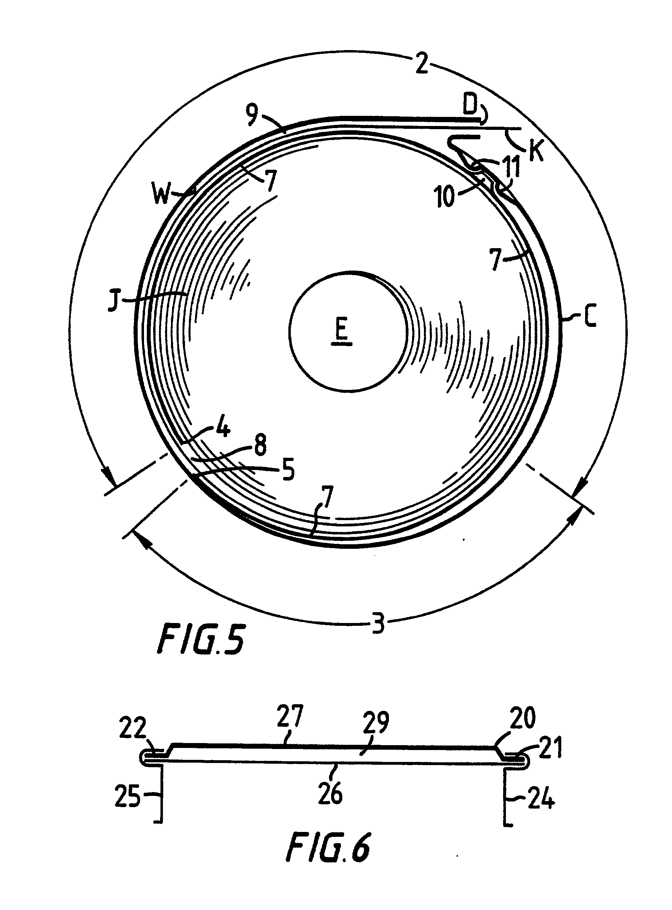

In der Fig. 3 ist eine aus dem Streifen 1 geformte Blattspirale 7 in Form einer nicht ganz geschlossenen Hülse gezeigt, zwischen deren beiden zur Hülsenmittelachse parallelen Endkanten 4 und 5 ein Längsspalt 8 von vorteilhafterweise 3 mm Weite frei bleibt, wenn die Blattspirale 7 mit ihren beiden spiralenartigen Endkanten mit entsprechender Krümmung in den Kassettenkörper C eingepaßt und entsprechend gehalten ist.

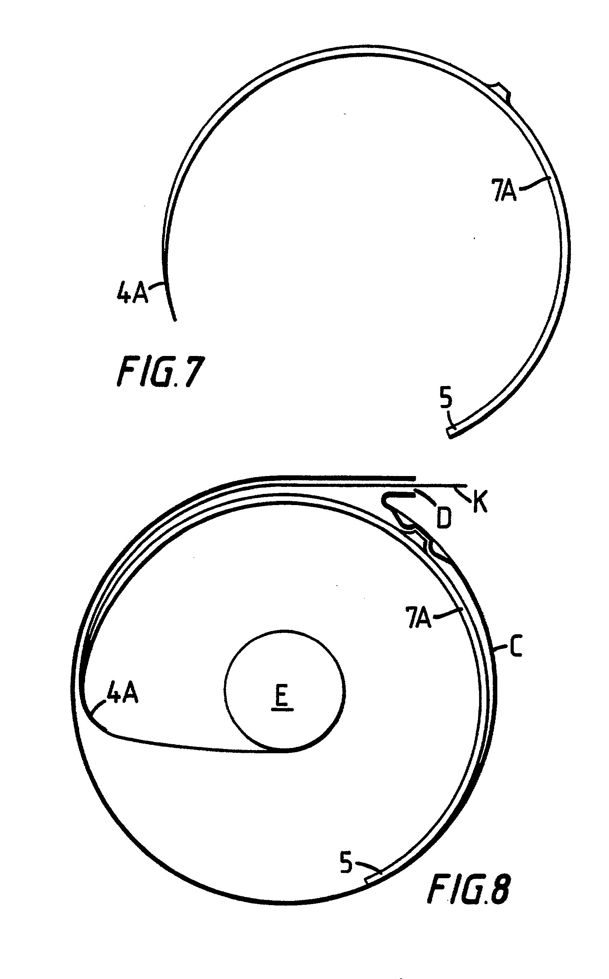

Auf die in Fig. 4 schematisch dargestellte Hälfte des Kassettenkörpers C ist an dessen rechtem offenen Ende die Endkappe B1 und an dessen entgegengesetztem Ende die Endkappe B2 aufgesetzt. Dabei weist der Kassettenkörper C benachbart seinen beiden offenen Enden Ringnuten auf, die durch Ausbuchtungen oder Ringsicken C1 bzw. C2 an der Innenwandung W des Kassettenkörpers nach innen hervorspringen. In die hierdurch gebildeten Nuten sind entsprechend umgebördelte Ränder der Endkappen B1 und B2 eingeschnappt oder eingepreßt. Wie weiter aus den Figuren 1 und 4 ersichtlich, ist der Abstand zwischen den Kammlinien der Sicken C1 und C2 von der Kassettenmittelachse kleiner als derjenige der Kasseteninnenwandung C von der letzteren.

Die als Hülse ausgebildete Blattspirale 7 liegt nun mit ihren den Spiralenrändern benachbarten Zonen auf den Kammlinien der zum Kassetteninneren hin vorspringenden Sicken C1 und C2, wodurch zwischen der Kassetteninnenwandung W und der Hülsenaußenseite der Blattspirale 7 ein Zwischenraum 9 genügender lichter Weite freibleibt, um die Hindurchführung des Filmstreifens J zu gestatten.

Der in Fig. 5 gezeigte Querschnitt durch eine geladene Kassette nach der Erfindung zeigt den Kassettenkörper C mit den an ihn angeformten Lippen zu beiden Seiten des Austrittsschlitzes D, von denen die eine Lippe annähernd tangential zur Kassettenwandung C und die andere Lippe zur ersten Lippe angenähert parallel verlaufend von der Kassettenwandung abgewinkelt ist. Im Inneren des Kassettenkörpers C ist die den Film leitende hülsenförmige Blattspirale 7 eingesetzt und umgibt den auf der Spule E aufgewickelten Film J. Wie in Fig. 5 gezeigt, befindet sich der längere Spiralenbereich 2 der Blattspirale 7 im Abstand von der Kassetteninnenwandung W, so daß zwischen beiden der Zwischenraum 9 freibleibt. Dieser Abstand wird durch die in Fig. 4 gezeigten Halterungsmittel (Sicken C1 und C2) aufrechterhalten, und zwar von der Endkante 4 des Bereichs 2 bis zum Übergang des Bereichs 2 in den Spiralenbereich 3 geringerer Breite. Dank der letzteren steht dieser kürzere Spiralenbereich 3 nicht in Eingriff mit den eben genannten Haltemitteln und liegt daher infolge der Uhrfederwirkung der Blattspirale 7 mit seiner Endkante 5 an der Kasetteninnenwandung W an. Das vorauslaufende Ende K des Filmes J gelangt nun, wenn der Film von der Spule E abgewickelt wird, durch den Längsspalt 8 zwischen den beiden Blattspiralen-Endkanten 4 und 5 in den Zwischenraum 9 und verläßt den Kassettenkörper C durch den Austrittsschlitz D nach außen, wie dies in Fig. 5 gezeigt ist.

An einer vom Zwischenraum 9 weg gelegenen Stelle der Außenwandung der Blattspirale 7 ist auf letzterer ein Eingriffsorgan, z.B. eine Nase 10 vorgesehen, die in ein entsprechendes Eingriffsorgan, z.B. eine Nische 11, die in der Kassettenwandung W angeformt sein kann, eingreift bzw. einschnappt. Befinden sich die Organe 10 und 11 in Eingriff miteinander, so befindet sich die Blattspirale 7 in ihrer vorschriftsmäßigen Stellung im Inneren des Kassettenkörpers C, wobei der Längsspalt 8 der Blattspirale 7 in Bezug auf die Abwickelrichtung des Filmes J von der Spule E vor dem Austrittsschlitz D im Kassettenkörper C liegen muß, und eine Drehung der Blattspirale 7 gegenüber dem Kassettenkörper C wird durch die Eingriffsglieder 10 und 11 verhindert.

Der durch den Zwischenraum 9 gebildete Durchlaß zwischen der Kasetteninnenwandung W und der Blattspirale 7 bildet ein äußerst wirksames Lichtlabyrinth, welches das Eindringen von Licht zu dem von der durch die Blattspirale gebildeten Hülse umschlossenen Film J verhindert. Ein kleines Stück des Filmes im nach dem Austrittsschlitz zu gelegenen Bereich des Zwischenraums 9 kann dabei durch Schleierbildung unbrauchbar werden, da die Austrittsschlitzeinrichtung D nicht mit Samtdichtungen versehen ist. Dieses Filmstück wird aber ohnehin nicht als Negativ für die Bildaufnahme verwendet, da es auch in den belichteten Film selbständig wieder aufwickelnden (autowind) Kameras ohnehin für die Befestigung des freien vorauslaufenden Filmendes auf der Wiederaufwickelspule benötigt wird.

Weiter verhindert die hülsenförmige Blattspirale ein uhrfederartiges Abspreizen des aufgewickelten Filmes gegen die Kasetteninnenwandung und die Gefahr des Auftretens von Reibungskräften infolge Wellung des Filmes im Bereich des Austrittsschlitzes, die beim Aufnahme-nach-Aufnahme erfolgenden Austreten des Filmes aus der Kassette überwunden werden müssen, wird stark herabgesetzt.

Die Tatsache, daß der Film von der Spule mit einer spiralenförmigen Krümmung abgewickelt bzw. abgezogen wird, gestattet das Eindringen von Luft zwischen die äußerste und die nächste, nach innen darunterliegende Windung des Filmes, wodurch Reibungskräfte weiter herabgesetzt werden. Diese Luft dient gewissermaßen als "Schmierung" desjenigen Bereichs der Außenfläche der hülsenartigen Blattspirale, über welchen der Film beim Aufziehen der Kamera hinweggezogen wird; hierdurch wird ein unerwünschter Ankerspill(capstan) effect vermieden. Der spiralenförmige Verlauf der Blattspirale 7 wird auch durch die Tatsache verdeutlicht, daß die Endkante 5 der Spirale größeren Abstand von der Kassettenmittelachse aufweist als die Spiralenendkante 4.

In Fig. 6 ist schematisch die eine Hälfte einer Kassette mit einem Kassettenkörper 20 und mit abgestuften Enden 21 und 22 geringeren Durchmessers, sowie den beiden Endkappen 24 und 25 und einer eingebauten hülsenförmigen Blattspirale 26 gezeigt. Zwischen seinen beiden abgestuften Enden weist der Kassettenkörper 20 einen radial auswärts erweiterten Kassettenbereich 27 auf, um zwischen dessen Innenwandung und der Außenwandung der Blattspirale 26 einen Zwischenraum 29 freizulassen. Die abgestuften Enden 21 und 22 des Kassettenkörpers 20 sowie die Spiralen-Randbereiche der Blattspirale 26 werden durch um beide herumgebördelte Ränder der Endkappen 24 und 25 zusammengedrückt und festgehalten.

Eine andere Ausführungsform der hülsenförmigen Blattspirale 7A ist in Fig. 7 gezeigt. Während das zur Anlage an die Kasetteninnenwandung bestimmte Ende 5 der Blattspirale 7A von gleicher Dicke ist wie der größte Teil der übrigen Blattspiralenwandung und vorzugsweise von gleicher Dicke wie das Ende 5 der in Fig. 5 gezeigten ersten Ausführungsform der Blattspirale, ist das entgegengesetzte Ende 4A von herabgesetzter Dicke, um die Biegsamkeit dieses Spiralenbereichs zu erhöhen.

In Fig. 8 ist in der geladenen Kassette nach Fig. 5 die Blattspirale 7 durch die Blattspirale 7A nach Fig. 7 ersetzt. Dabei ist gezeigt, wie von der Spule E gerade die letzten Wicklungen des Filmes J abgewunden werden und dadurch die auftretende Zugspannung das freie Ende 4A der Blattspirale 7A abgebogen ist und hierdurch gestattet, daß der von der Spule E weggeführte Filmbereich einem gekrümmten Austrittspfad folgt, wodurch die zum Abwickeln insbesondere der letzten Windungen des Filmes J von der Spule E erforderliche Kraft wesentlich herabgesetzt wird.

**Patentansprüche**

1. Kassette zur Aufnahme eines auf eine Spule aufgewickelten photographischen Films, welche einen im wesentlichen zylindrisch ausgebildeten Kassettenkörper (C) mit Endkappen (B1, B2) und einen zur Spulenachse parallelen Filmaustrittsschlitz (D) und im Inneren des Kassettenkörpers (c) eine Filmführung (7) umfasst, wobei zwischen Innenwandung (W) des Kassettenkörpers (c) und Filmführung ein Zwischenraum (9) als Dunkelkanal für den Film freigelassen ist und welche Filmführung durch eine Drehsicherung gegen Verdrehen innerhalb des Kassettenkörpers (C) gesichert ist, dadurch gekennzeichnet, daß die Filmführung (7) als eine in den Kassettenkörper (C) passende und in ihm festgehaltene, aus einem lichtundurchlässigen, federnden Materialstreifen (1) geformte Filmleit-Blattspirale (7) ausgebildet ist, daß ein längerer innerer Spiralenbereich (2) der Blattspirale (7) eine solche Breite parallel zur Achse der Spule (E) aufweist, daß er durch an den beiden Stirnenden der Kassette vorgesehene Spiralenhalterungen (C1, B1; C2, B2) im Abstand von der Kasetteninnenwandung (W) gehalten wird, daß ein kürzerer äußerer Spiralenbereich (3) eine solche Breite parallel zur Spulenachse aufweist, daß dieser äußere Bereich außer Eingriff mit den Spiralenhalterungen bleibt und mit seiner äußeren Endkante (5) in Filmausziehrichtung vor dem Austrittsschlitz (D) an der Innenwandung (W) des Kassettenkörpers (C) anliegt, und daß zwischen der äußeren Endkante (5) des äußeren Spiralenbereichs (3) und der inneren Endkante (4) des inneren Spiralenbereichs (2) ein Filmleitspalt (8) frei bleibt, so daß die vorauslaufende Endkante (K) eines auf die Spule (E) aufgewickelten Films (J) durch den Filmleitspalt (8) in den zwischen der Außenseite des inneren Spiralenbereichs und der Kassetteninnenwandung verbleibenden Zwischenraum (9) hinein und durch den Austrittsschlitz (D) aus der Kassette herausgezogen werden kann.

2. Kassette nach Anspruch 1, dadurch gekennzeichnet, daß als federndes Material für die Filmleit-Blattspirale (7) Hartaluminium oder rostfreier Stahl, vorzugsweise mit einer Dicke von 0,1 bis 0,5 mm verwendet wird.

3. Kassette nach Anspruch 1, dadurch gekennzeichnet, daß als federndes Material für die Filmleit-Blattspirale (7) Kunststoff verwendet wird.

4. Kassette nach Anspruch 3, dadurch gekennzeichnet, daß die Dicke der Filmleit-Blattspirale (7) 0,1 bis 0,5 mm beträgt.

5. Kassette nach Anspruch 3, dadurch gekennzeichnet, daß die Dicke des längeren, inneren Spiralbereichs (2) der Filmleit-Blattspirale (7) zu seiner inneren Endkante (4) hin bis zu 0,025 mm abnimmt.

6. Kassette nach einem der Ansprüche 1–5, dadurch gekennzeichnet, daß die Länge des inneren Spiralenbereichs (2) mehr als 50% vorzugsweise 2/3 der Gesamtlänge der Blattspirale (7) beträgt.

## Claims

1. A cassette which is adapted to contain a photographic film wound on a spool, which comprises a substantially cylindrical cassette body (C) with end caps (B1, B2) and a film exit slot (D) parallel to the spool axis and in the interior of the cassette body (C) a film guide (7), a space (9) being left free between the inner wall (W) of the cassette body (C) and the film guide as a dark passage for the film, and which film guide is secured by a rotation prevention mechanism against twisting within the cassette body (C), characterised in that the film guide (7) is designed as a scroll control chamber (7) which is made of a light-impermeable, resilient strip of material (1) which fits the cassette body (C) and is secured therein, a longer inner coil area (2) of the scroll control chamber (7) has such a width parallel to the axis of the spool (E) that it is kept at a distance from the inner wall (W) of the cassette by coil holders (C1, B1; C2, B2) provided on both ends of the cassette, a shorter outer coil area (3) has such a width parallel to the spool axis that said outer area remains out of contact with the coil holders and rests in front of the exit slot (D) with its outer end edge (5) in the direction of withdrawal of the film on the inner wall (W) of the cassette body (C), and a film guidance gap (8) remains free between the outer end edge (5) of the outer coil area (3) and the inner end edge (4) of the inner coil area (2) so that the leading end edge (K) of a film (J) wound on the spool (E) can be drawn through the film guidance gap (8) into the space (9) remaining between the outside of the inner coil area and the inner wall of the cassette and out of the cassette through the exit slot (D).

2. A cassette according to Claim 1, characterised in that hard aluminium or stainless steel, preferably having a thickness of 0.1 to 0.5 mm, is used as the resilient material for the scroll control chamber (7).

3. A cassette according to Claim 1, characterised in that plastic is used as the resilient material for the scroll control chamber (7).

4. A cassette according to Claim 3, characterised in that the thickness of the scroll control chamber (7) is 0.1 to 0.5 mm.

5. A cassette according to Claim 3, characterised in that the thickness of the longer inner coil area (2) of the scroll control chamber (7) tapers down to 0.025 mm at its inner end edge (4).

6. A cassette according to one of Claims 1 to 5, characterised in that the length of the inner coil area (2) is greater than 50%, preferably 2/3, of the total length of the scroll control chamber (7).

## Revendications

1. Cassette pour la réception d'un film photographique enroulé sur une bobine, comprenant un corps de cassette (C) sensiblement cylindrique avec des capuchons d'extrémité (B1, B2), une fente (D) de sortie de film parallèle à l'axe de la bobine et, à l'intérieur du corps de cassette (C), un guidage (7) de film, un espace (9) étant prévu comme canal obscur pour le film entre la paroi intérieure (W) du corps de cassette (C) et le guidage de film et ledit guidage de film étant immobilisé contre la rotation à l'intérieur du corps de cassette (C) par une protection contre la rotation, caractérisée en ce que le guidage (7) de film est réalisé comme lame-spirale (7) de guidage de film s'ajustant dans le corps de cassette (C) et maintenue dans ce dernier et formée à partir d'une bande (1) de matière élastique imperméable à la lumière, que parallèlement à l'axe de la bobine (E), la largeur d'une zone intérieure (2) plus longue de la lame-spirale (7) est telle que ladite zone soit maintenue à distance de la paroi intérieure (W) de la cassette par des parties de maintien de spirale (C1, B1; C2, B2) prévues aux extrémités frontales de la cassette, que parallèlement à l'axe de la bobine, la largeur d'une zone extérieure (3) plus courte de la spirale est telle que cette zone extérieure ne soit pas en contact avec les parties de maintien de spirale et soit appliquée par son bord d'extrémité extérieur (5) contre la paroi intérieure (W) du corps de cassette (C), en avant de la fente de sortie (D) dans le sens de sortie du film, et qu'entre le bord d'extrémité extérieur (5) de la zone extérieur (3) de la spirale et le bord d'extrémité intérieur (4) de la zone intérieure (2) de la spirale subsiste une fente (8) de guidage de film, de sorte que le bord d'extrémité (K) d'amorce d'un film (J) enroule sur la bobine (E) puisse être tiré à travers la fente (8) de guidage de film dans l'espace (9) entre la face extérieure de la zone intérieure de la spirale et la paroi intérieure de la cassette et extrait de la cassette à travers la fente de sortie (D).

2. Cassette selon la revendication 1, caractérisée en ce que l'on utilise comme matière élastique pour la lame-spirale (7) de guidage de film de l'aluminium dur ou de l'acier inoxydable, de préférence d'une épaisseur allant de 0,1 à 0,5 mm.

3. Cassette selon la revendication 1, caractérisée en ce que l'on utilise une matière plastique comme matière élastique pour la lame-spirale (7) de guidage de film.

4. Cassette selon la revendication 3, caractérisée en ce que l'épaisseur de la lame-spirale (7) de guidage de film est de 0,1 à 0,5 mm.

5. Cassette selon la revendication 3, caractérisée en ce que l'épaisseur de la zone intérieure (2) plus longue de la lame-spirale (7) de guidage de film diminue vers son bord d'extrémité intérieur (4) jusqu'à 0,025 mm.

6. Cassette selon l'une quelconque des revendications 1 à 5, caractérisée en ce que la longueur de la zone intérieure (2) de la spirale constitue plus de 50%, de préférence ⅔ de la longueur totale de la lame-spirale (7).

FIG.1

**FIG. 2**

**FIG. 3**

**FIG. 4**

**FIG.5**

**FIG.6**

FIG.7

FIG.8